# EUROPEAN PATENT APPLICATION

(11) **EP 1 843 595 A2**
(43) Date of publication of application: **10.10.2007**
(21) Application number: 07113266.6
(22) Date of filing: 25.06.2003
(51) Int. Cl.: H04N 7/26, H04N 7/50

(54) **Coding and decoding method and apparatus using plural scanning patterns**

(30) Priority: 16.07.2002 KR 20020041979
(62) Divisional of application: 03764227.9
(71) Applicant: SAMSUNG ELECTRONICS CO., LTD., Suwon-si, Gyeonggi-do (KR)
(72) Inventor: Jeon, Byeung-Woo, Seongnam-si, Gyeonggi-do (KR); Kim, Yong-Je 503-105 Jinsan Maeul Samsung 5-cha Apt., 1161, Yongin-si, Gyeonggi-do (KR); Park, Jeong-Hoon, Gwanak-gu, Seoul (KR)
(74) Representative: Robinson, Ian Michael

(57) **Abstract**

Provided is a coding and decoding method and apparatus using a plurality of scanning patterns. The method for coding image data includes: (a) obtaining NxM data by firstly source-coding the image data; (b) scanning the NxM data using a predetermined scan pattern selected from a plurality of scan patterns in response to the obtained NxM data; and (c) secondly source-coding the scanned data. Accordingly, coding and decoding image data having various characteristics can be implemented efficiently. Particularly, even for the image data having an interlaced scanned frame format, more efficient coding and decoding can be achieved.

## Description

### Technical Field

The present invention relates to a method and apparatus for coding and decoding image data. More specifically, embodiments of the present invention relate to a coding and decoding method and apparatus using a plurality of scanning patterns.

### Background Art

As international standards for videophone, International Telecommunication Union (ITU-T : ITU Telecommunication Standardization Sector) has recommended a series of coding technologies such as H.261, H.263, H.263+, etc., and proposed additional technologies such as H.263++ Revision, MPEG-4, etc. However, such international standards do not comply with newly raised issues such as end-to-end delay time, coding efficiency, and so on. Consequently, international standardization organizations such as ITU-T and ISO/IEC are earnestly studying next generation coding technology for next generation videophone.

While only progressive scanning images have been considered as objects of the conventional coding technology such as H.261, H.263, etc., next generation technology considers not only the progressive but also interlaced scanned images. However, in case of merely applying the coding technology for the progressive scanned images to the interlaced scanned images and vice versa, coding efficiencies can be lowered, because image producing methods for the progressive and the interlaced scanned images are different, and accordingly, characteristics of the coding image data are different from each other.

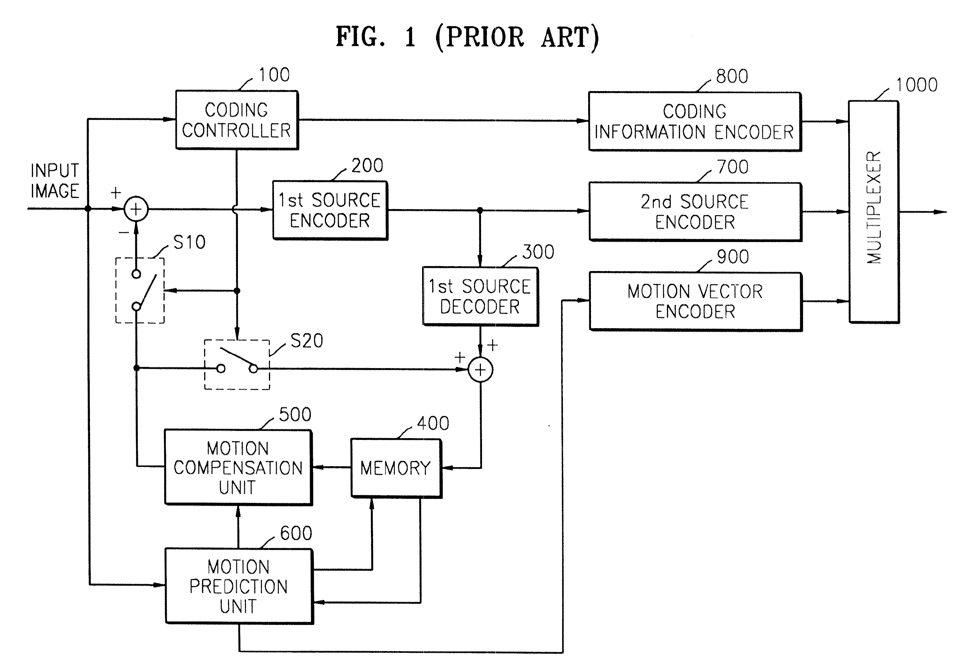

A conventional coding apparatus is shown in FIG. 1 as a block diagram. Referring to FIG. 1, the coding apparatus includes a coding controller 100, a first source encoder 200, a second source encoder 700, a first source decoder 300, a memory 400, a motion compensation unit 500, and a motion prediction unit 600.

When an input image is received, the coding controller 100 determines whether to implement motion compensation for the input image, i.e., a coding type, according to the characteristic of the input image or an objective of motion that a user wishes to obtain, and outputs a corresponding control signal to a first switch S10. For motion compensation, the first switch S10 turns on, because a previous or a following input image is needed. If the motion compensation is not required, the first switch S10 turns off, because the previous or the following input image is not needed. If the first switch S10 turns on, differential image data between the input image and the previous image is provided to the first source encoder 200. If the first switch S10 turns off, the input image data is provided to the first source encoder 200.

The first source encoder 200 transforms the input image data to produce transformation coefficients, and quantizes the transformation coefficients to produce NxM data according to a predetermined quantization process. As an example for the transformation, discrete cosine transformation (DCT) may be used.

The input image data received by and coded through the first source encoder 200 can be used as reference data for motion compensation of a following or a previous input image data. Therefore, such coded input image data is inversely quantized and transformed through the first source decoder 300 that processes data inversely to the first source encoder 200 and then stored in the memory 400. If the data provided to the memory 400 through the first source decoder 300 is the differential image data, the coding controller 100 turns on a second switch S20 so that the differential image data is added to an output of the motion compensation unit 500 and then stored in the memory 400.

The motion prediction unit 600 compares the input image data with the data stored in the memory 400, and searches for data that mostly approximate the input image data provided at present. After comparing the searched data with the input image data, the motion prediction unit 600 outputs a motion vector. When the motion vector is provided to the memory 400, the memory 400 outputs corresponding data to the motion compensation unit 500. Based on the data provided from the memory 400, the motion compensation unit 500 produces a compensation value corresponding to the presently coding image data.

The second source encoder 700 encodes and outputs the quantized transformation coefficients provided from the first source encoder 200. A motion vector encoder 900 receives information on the motion vector from the motion prediction unit 600, and encodes and outputs such information. A coding information encoder 800 receives coding type information, quantization information, and other information required for decoding from the coding controller 100, and encodes and outputs such information. A multiplexer 1000 multiplexes outputs of the second source encoder 700, the coding information encoder 800, and the motion vector encoder 900, and outputs an ultimate bit stream.

The conventional coding apparatus as described above generally utilizes a coding method of dividing the input image data by a predetermined size and coding in a unit of a macro block.

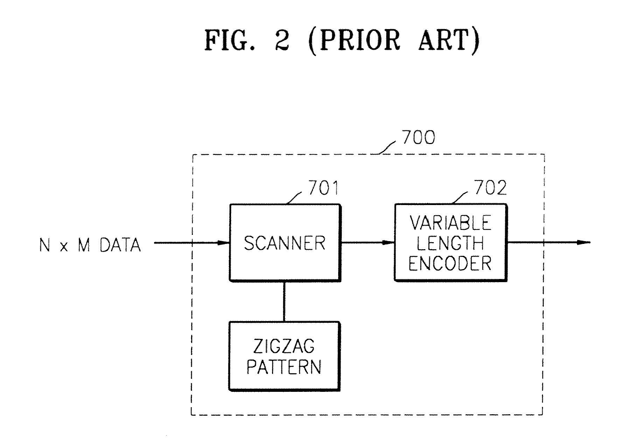

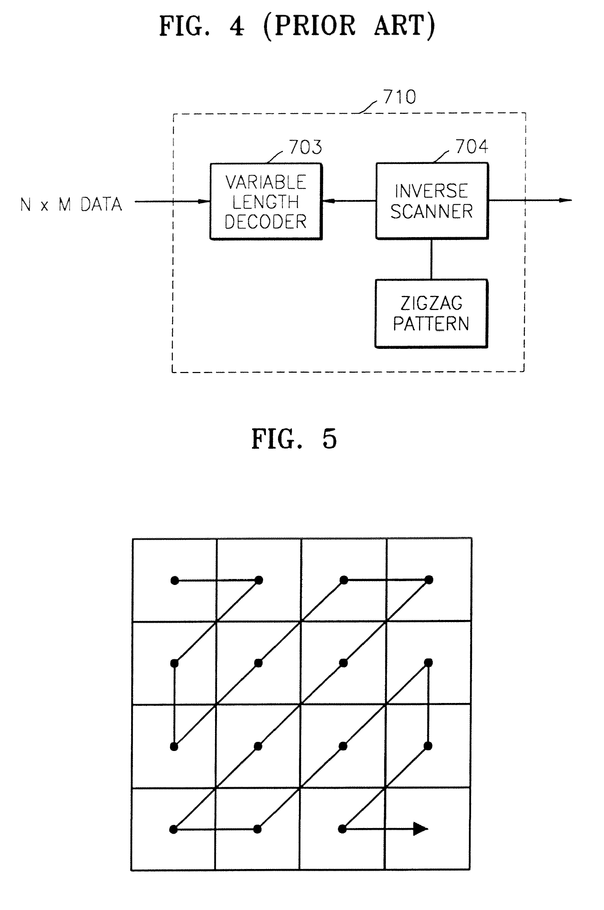

FIG. 2 is a more specific block diagram of the second source encoder 700 shown in FIG. 1. Referring to FIG. 2, the second source encoder 700 includes a scanner 701 and a variable length encoder 702. The scanner 701 receives the NxM data comprised of the quantized transformation coefficients, and scans the NxM data in a zigzag pattern as shown in FIG. 5. The variable length encoder 702 encodes the scanned data in variable length.

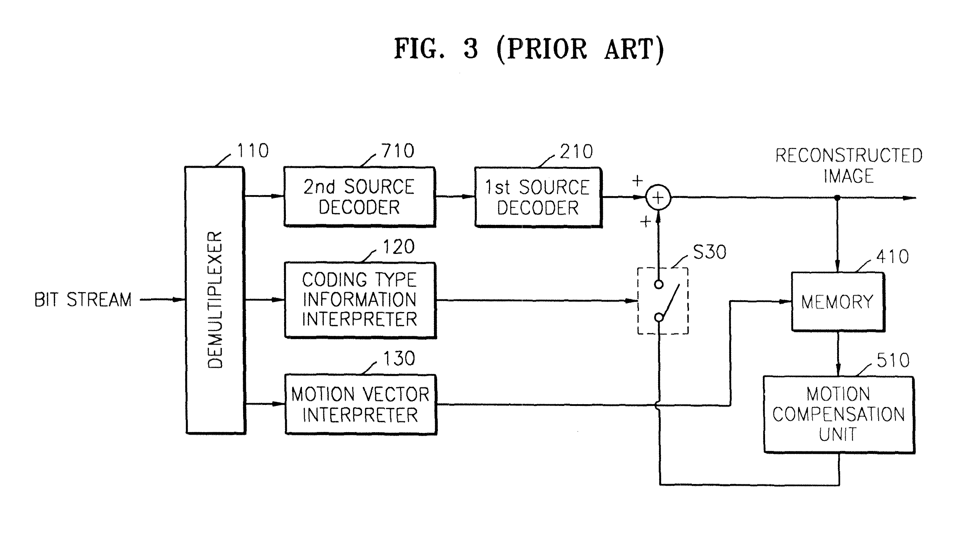

FIG. 3 is a block diagram of a decoding apparatus for decoding the data coded by the coding apparatus shown in FIG. 1. Referring to FIG. 3, the decoding apparatus includes a demultiplexer 110, a second source decoder 710, a first source decoder 210, a coding type information interpreter 120, and a motion vector interpreter 130.

The demultiplexer 110 demultiplexes the bit stream into entropy-coded and quantized transformation coefficients, motion vector information, coding type information, etc. The second source decoder 710 entropy-decodes the coded transformation coefficients and outputs quantized transformation coefficients. The first source decoder 210 source-decodes the quantized transformation coefficients. That is, the first source decoder 210 processes data inversely to the first source encoder 200. For example, if the first source encoder 200 performs the discrete cosine transformation (DCT), the first source decoder 210 performs inverse discrete cosine transformation (IDCT). Consequently, the image data is recovered. Then, the reconstructed image data is stored in a memory 410 for motion compensation.

The coding type information interpreter 120 discriminates the coding type. If the coding type is an inter type that requires motion compensation, the coding type information interpreter 120 turns on a third switch S30 so that a motion compensation value provided from a motion compensation unit 510 is added to the data provided from the first source decoder 210 to produce the reconstructed image data. The motion vector interpreter 130 indicates a location directed by the motion vector obtained from the motion vector information, and the motion compensation unit 510 produces a motion compensation value from the reference image data directed by the motion vector.

FIG. 4 is a more specific block diagram of the second source decoder 710 shown in FIG. 3. Referring to FIG. 4, the second source decoder 710 includes a variable length decoder 703 and an inverse scanner 704. The second source decoder 710 processes data inversely to the second source encoder 700 shown in FIG. 2. The variable length decoder 703 decodes the quantized transformation coefficients that are coded in variable length, and recovers the NxM data. The inverse scanner 704 inversely scans the NxM data using the zigzag scan pattern as shown in FIG. 5.

The conventional coding and decoding apparatus as described above may cause problems in case of coding or decoding interlaced scanned images. Since there exists a time difference between the fields, the image can be altered even in adjacent fields. The problem is very serious in case of an image having relatively much motion. Particularly, in case of coding the interlaced scanned images in a unit of a frame, not in a unit of a field, i.e., if a picture format that is a unit for coding is an interlaced scanned frame format, locations of objects included in the image can be changed in accordance with top and bottom field data, and accordingly, the outlines of the objects can be distorted and the characteristics of the data can be considerably changed in a vertical direction.

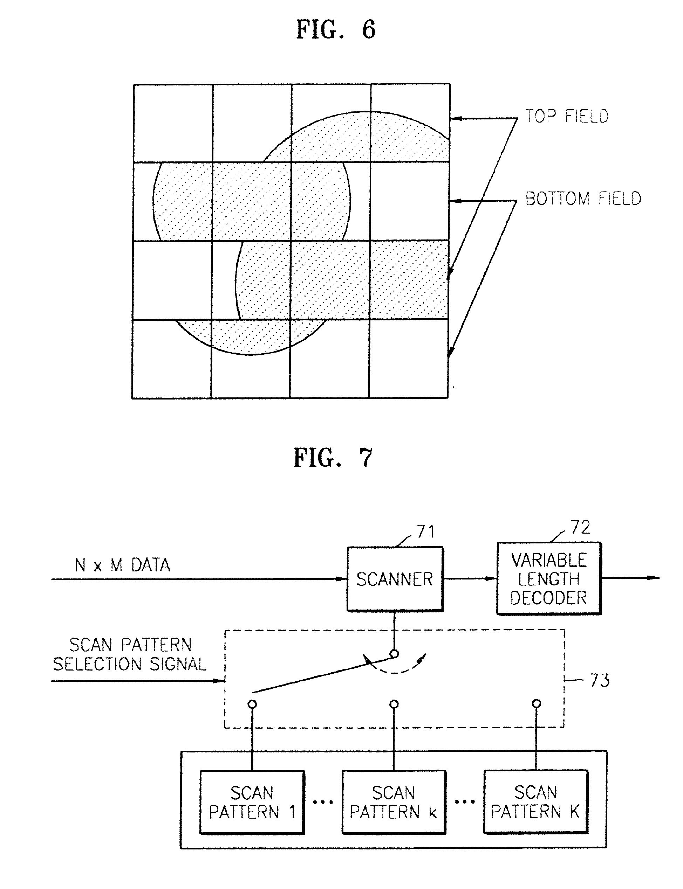

FIG. 6 shows an example of an image data having an interlaced scanning frame format. Referring to FIG. 6, data existing in first, third, or other odd columns of the image data forming an NxM block is the image data from the top field of the interlaced scanned image, and data existing in second, fourth, or other even columns is the image data from the bottom field. If there is a time difference between the top and the bottom fields, and if the motion corresponding to the time difference is great, an identical object is formed with incorrectly arranged images in a vertical direction. In case of transforming and coding such data, high frequency components increase in a vertical direction, and therefore, non-zero transformation coefficients occasionally appear even in lower columns of the NxM block that is comprised of the transformation coefficients. Moreover, in case of scanning such data using the zigzag scan pattern as shown in FIG. 5, coding efficiencies are lowered because the characteristic that the non-zero transformation coefficients occasionally appear in a vertical direction is not sufficiently considered. Likewise, the coding efficiency problem arises in case of an image having relatively much motion, or an image having relatively much variation in a vertical direction.

As described above, the conventional coding technology has a problem in that the maximal coding efficiency for the image data having various characteristics is not achieved because a single scan pattern is used for scanning the image.

### Disclosure of the Invention

According to the present invention there is provided a coding apparatus and decoding apparatus, and a coding method and a decoding method, as set forth in the appended claims. Other features of the invention will be apparent from the dependent claims, and the description which follows.

The present invention provides a coding and decoding method and apparatus, which can improve coding efficiency of image data having various characteristics.

The present invention also provides a coding and decoding method and apparatus, which can improve coding efficiency of image data having an interlaced scanned image frame format.

The present invention also provides a coding and decoding method and apparatus, which can improve coding efficiency of image data having relatively much motion and relatively much variation in a vertical direction.

According to an aspect of the present invention, there is provided a coding method of image data, including : (a) obtaining NxM data by firstly source-coding the image data; (b) scanning the NxM data using a predetermined scan pattern selected from a plurality of scan patterns in response to the obtained NxM data; and (c) secondly source-coding the scanned data.

According to another aspect of the present invention, there is provided a coding method of image data, including: (a) obtaining NxM data by firstly source-coding the image data; (b) dividing the obtained NxM data into a plurality of areas; (c) scanning the NxM data using predetermined scan patterns respectively selected from a plurality of scan patterns in response to the divided areas; and (d) secondly source-coding the scanned data.

Step (a) includes :(a1) transforming the image data; and (a2) quantizing the transformed image data to produce the NxM data.

Step (c) includes :(c1) selecting a scan pattern that scans an area having more substantially zero component values later than the other areas of the NxM data; and (c2) scanning the NxM data using the selected scan pattern.

It is preferable that step (b) includes :(b1) horizontally dividing the NxM data to produce at least two sub-areas, (b2) vertically dividing the NxM data to produce at least two sub-areas, or (b3) horizontally and vertically dividing the NxM data to produce at least four sub-areas.

According to still another aspect of the present invention, there is provided a decoding method of image data, including: (a) producing scan pattern selection information to select a predetermined scan pattern among a plurality of scan patterns; (b) inversely scanning the image data that is variable-length-decoded to obtain NxM data using at least one scan pattern selected on the basis of the scan pattern selection information; and (c) source-decoding the NxM data.

It is preferable that step (c) includes:(c1) inversely quantizing the NxM data; and (c2) inversely transforming and decoding the inversely quantized NxM data.

According to yet another aspect of the present invention, there is provided a decoding method of image data, including : (a) variable-length-decoding the image data; (b) inversely scanning the image data variable-length-decoded to obtain NxM data using at least one scan pattern selected from a plurality of scan patterns; and (c) source-decoding the NxM data.

It is preferable that step (b) includes :(b11) selecting a scan pattern that scans an area having more substantially zero component values later than the other areas of the NxM data; and (b2) inversely scanning the NxM data using the selected scan pattern.

Preferably, step (b) includes :(b21) selecting a scan pattern that scans horizontal high frequency component values relatively earlier than vertical high frequency component values in the event that the NxM data is based on the image data having an interlaced scanned frame format; and (b2) inversely scanning the NxM data using the selected scan pattern.

It is preferable that step (b) includes: (b22) selecting a scan pattern that scans horizontal high frequency component values and vertical high frequency component values in a substantially equal order in the event that the NxM data is based on the image data having an interlaced scanned field format or progressive scanned frame format; and (b2) inversely scanning the NxM data using the selected scan pattern.

It is preferable that step (b) includes: (b31) selecting a scan pattern corresponding to a macro block type of the NxM data; and (b2) inversely scanning the NxM data using the selected scan pattern.

It is preferable that step (b) includes: (b41) selecting a scan pattern corresponding to a picture format and a macro block type of the NxM data; and (b2) inversely scanning the NxM data using the selected scan pattern.

It is preferable that step (a) includes: (a1) transforming code words that constitute the image data into predetermined symbol data.

According to yet another aspect of the present invention, there is provided a decoding method of image data, including : (a) obtaining symbol data by variable-length-decoding the image data; (b) obtaining transformation coefficients from the symbol data; (c) producing scan pattern selection information to select a predetermined scan pattern among a plurality of scan patterns; (d) inversely scanning the transformation coefficients to obtain NxM data using the scan pattern based on the scan pattern selection information; and (e) source-decoding the inversely scanned data.

It is preferable that step (c) includes :(c1) analyzing the received picture format information; and(c21) selecting a scan pattern that scans horizontal high frequency component values relatively earlier than vertical high frequency component values in the event that the result of analyzing is that the received picture format is an interlaced scanned frame format or(c1) analyzing the received picture format information; and (c22) selecting a scan pattern that scans horizontal high frequency component values and vertical high frequency component values in a substantially equal order in the event that the result of analyzing is that the received picture format is an interlaced scanned field format or progressive scanned frame format.

According to yet another aspect of the present invention, there is provided a coding apparatus of image data, including a first encoder, a coding controller, and a second encoder. The first encoder firstly encodes the image data to produce NxM data. The coding controller produces scan pattern selection information used to select a predetermined scan pattern in response to NxM data. The second encoder scans the NxM data with the scan pattern based on the scan pattern selection information and secondly encoding the NxM data.

It is preferable that the first encoder includes a transformer that transforms and encodes the image data, and a quantizer that quantizes the data transformed by the transformer and produces the NxM data.

According to yet another aspect of the present invention, there is provided a decoding apparatus of image data, including a second decoder, a scan pattern selector, and an inverse scanner. The second decoder decodes the image data to produce transformation coefficients. The scan pattern selector produces a scan pattern selection information to select a predetermined scan pattern among a plurality of scan patterns. The inverse scanner inversely scans the transformation coefficients to NxM data using the scan pattern based on the scan pattern selection information.

Meanwhile, the above aspects can be achieved using a computer readable information-recording medium on which program codes to implement the above-described coding or decoding method are recorded.

### Brief Description of the Drawings

FIG. 1 is a block diagram of a conventional coding apparatus;
FIG. 2 is a more specific block diagram of a second source encoder shown in FIG. 1;
FIG. 3 is a block diagram of a decoding apparatus for decoding data coded by the coding apparatus shown in FIG. 1;
FIG. 4 is a more specific block diagram of a second source decoder shown in FIG. 3;
FIG. 5 shows an example of a zigzag scan pattern;
FIG. 6 shows an example of image data having an interlaced scanning frame format;
FIG. 7 is a block diagram of an encoder according to a preferred embodiment of the present invention;
FIG. 8 is a block diagram of a coding apparatus for coding image data according to a preferred embodiment of the present invention;
FIG. 9 is a block diagram of a decoder according to a preferred embodiment of the present invention;
FIGS. 10 to 12 show embodiments of a scan pattern selector shown in FIG. 9;
FIGS. 13 to 15 show scan patterns according to an embodiment of the present invention;
FIGS. 16 and 17 show scan patterns according to another embodiment of the present invention; and
FIGS. 18 to 21 show dividing modes for a plurality of scan patterns according to preferred embodiments of the present invention.

### Best mode for carrying out the Invention

A preferred embodiment of an encoder according to the present invention is shown in FIG. 7. Referring to FIG. 7, the encoder is for secondly source-coding and includes a scanner 71 and a variable length encoder 72. A switch 73 shown in FIG. 7 selects at least one scan pattern among a plurality of scan patterns NxM according to a scan pattern selection signal provided from outside. In a preferred embodiment of the present invention, the scan pattern selection signal is provided from a coding controller (not shown in FIG. 7). The scan pattern means reference information to determine an order to read NxM data.

The scanner 71 scans the NxM data provided from outside using at least one scan pattern selected by the switch 73 on the basis of the scan pattern selection signal. In other words, the scanner 71 reads the NxM data in a predetermined order and transforms it into symbol data. The variable length encoder 72 encodes in variable length the scanned data, i.e., the symbol data.

The NxM data in the preferred embodiment of the present invention means block data obtained by firstly source-coding the image data. The term 'firstly source-coding' means transforming two-dimensional image data having a plurality of pixel values into data in another domain. For example, the image data comprised of pixel values is transformed into data in the frequency domain through a discrete cosine transformation (DCT). Through such firstly source-coding process, the image data can be represented by the data having substantially the same information but smaller sizes. Further, the symbol data in the preferred embodiment of the present invention means run-level data obtained as a result of scanning the NxM data with the predetermined scan pattern. The run-level data may be one-dimensional (1D) data in which a run value and a level value are divided from each other, two-dimensional (2D) data in which the run value and the level value are paired, or three-dimensional data (3D) comprised of a last value, a run value, and a level value. The variable length encoder 72 encodes the 2D run-level data into corresponding code words (Run, Level), or encodes the 1 D run-level data in which run components and level components are divided from each other into corresponding code words (1 D variable length encoding). It is also possible to implement 3D variable length encoding for encoding the 3D run-level data (Last, Run, Level) into corresponding code words. The variable length encoder 72 may utilize a Huffman encoder or an arithmetic encoder.

Although not shown in FIG. 7, the coding controller selects a scan pattern according to a predetermined scan pattern selection logic, and provides the scan pattern selection information corresponding to the selected scan pattern to the switch 73. In accordance with the scan pattern selection logic, the coding controller may provide scan pattern selection information to select the scan pattern that reads an area having more substantially zero values later than the other area of the NxM data. Particularly, in the event that the NxM data is obtained from the image data having an interlaced scanned frame format, the coding controller provides such scan pattern selection information that selects the scan pattern to read horizontal high frequency component values relatively earlier than vertical high frequency component values in comparing with a zigzag pattern. In the event that the NxM data is obtained from the image data having an interlaced scanned field format or a progressive scanned frame format, the coding controller provides suitable scan pattern selection information that selects the scan pattern to read the vertical and horizontal high frequency component values in a substantially equal order.

Alternatively, the coding controller may provide scan pattern selection information to select a scan pattern corresponding to a macroblock type of the NxM data, or provide scan pattern selection information to select a scan pattern corresponding to a picture format and a macro block type of the NxM data. Further, the coding controller may produce scan pattern selection information to select different scan patterns for at least two sub-areas obtained by horizontally dividing the NxM data or to select different scan patterns for at least two sub-areas obtained by vertically dividing the NxM data, or may produce scan pattern selection information to select different scan patterns for at least four sub-areas obtained by vertically and horizontally dividing the NxM data. Moreover, it is also possible to arbitrarily divide the NxM data area into at least two sub-areas and to provide scan pattern selection information to select different scan patterns for each of such sub-areas.

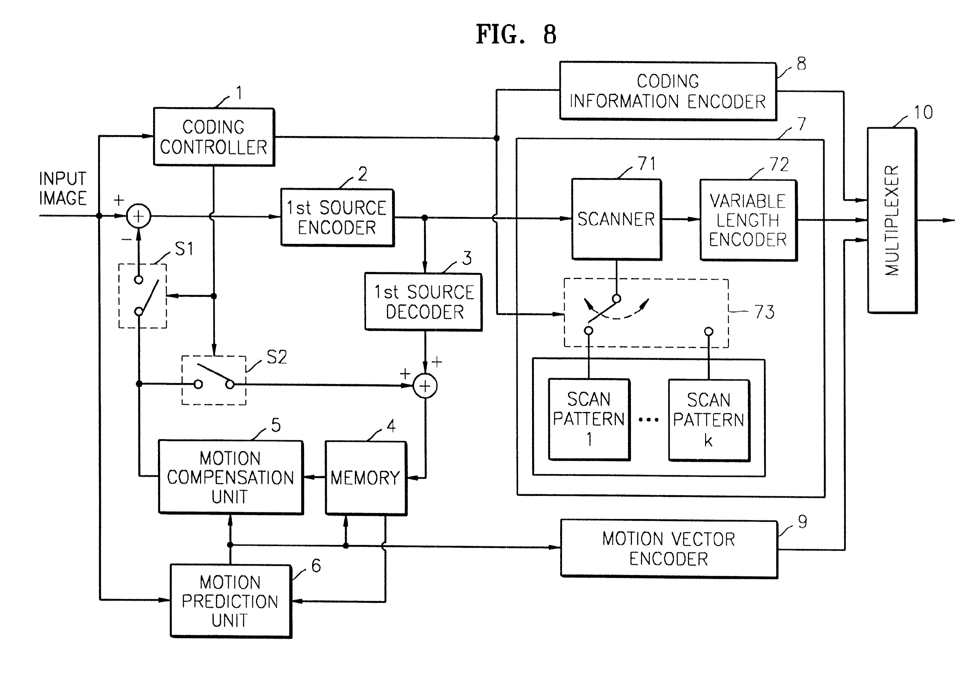

FIG. 8 is a block diagram of a coding apparatus for coding image data according to a preferred embodiment of the present invention. As to the blocks having identical functions to the blocks described with reference to FIG. 7, the same reference numerals are used in FIG. 8 and redundant descriptions thereof are omitted below.

Referring to FIG. 8, the coding apparatus includes a first source encoder 2 for source-coding the image data to obtain NxM data, a coding controller 1 for providing scan pattern selection information to inform a scan pattern selected from a plurality of scan patterns, and a second source encoder 7 for scanning the NxM data using the selected scan pattern on the basis of the scan pattern selection information so that each of the NxM data corresponds to each of sub-areas when the NxM data is divided into a plurality of sub-areas, and for entropy-coding the scanned data. Further, the coding apparatus includes a first source decoder 3, a memory 4, a motion compensation unit 5, a motion prediction unit 6, a coding information encoder 8, a motion vector encoder 9, and a multiplexer 10.

Input image data is comprised of frames to be provided from a camera at a predetermined frame rate, or blocks to be obtained by dividing the frames by a predetermined size. The frame includes a progressive scanned frame obtained through progressive scanning, and an interlaced scanned field or frame obtained through interlaced scanning. Therefore, the image data described below means a picture having a progressive scanned frame format, interlaced frame format, field format, or block format.

When an input image is provided, the coding controller 1determines a coding type, i.e., an intra-coding type or an inter-coding type, based on whether to implement motion compensation for the input image according to the characteristic of the input image or an objective of motion that a user wishes to obtain, and outputs a corresponding control signal to a first switchS1. For motion compensation, the first switch S1 turns on, because a previous or a following input image is needed. If motion compensation is not required, the first switch S1 turns off, because the previous or the following input image is not needed. If the first switch S1 turns on, differential image data between the input image and the previous image is provided to the first source encoder 2. If the first switch S1 turns off, the input image data is provided to the first source encoder 2.

Further, the coding controller 1 provides scan pattern selection information to the second source encoder 7. The scan pattern selection information is the same information as already described with reference to FIG. 7. Moreover, the coding controller 1 transfers the scan pattern selection information to a transmitter (not shown) or stores the information, if necessary.

The first source encoder 2 quantizes transformation coefficients obtained by transforming the input image data according to a predetermined quantization process to produce NxM data that is two-dimensional data comprised of the quantized transformation coefficients. As an example of transformation, a discrete cosine transformation (DCT) may be used. The quantization is performed according to a predetermined quantization process.

The input image data coded through the first source encoder 2 can be used as reference data for motion compensation of a following or a previous input image data. Therefore, such coded input image data is inversely quantized and transformed through the first source decoder 3 that processes data inversely to the first source encoder 2 and, then, stored in the memory 4. If the data provided to the memory 4 through the first source decoder 3 is the differential image data, the coding controller 1 turns on a second switch S2 so that the differential image data is added to an output of the motion compensation unit 5 and, then, stored in the memory 4.

The motion prediction unit 6 compares the input image data with the data stored in the memory 4, and searches for data that most closely approximates the input image data provided at present. After comparing the searched data with the input image data provided at present, the motion prediction unit 6 outputs a motion vector (MV). The motion vector is obtained with reference to at least one picture. In other words, the motion vector can be produced with reference to a plurality of previous and/or following pictures. When the motion vector is provided to the memory 4, the memory 4 outputs corresponding data to the motion compensation unit 5. Based on the data provided from the memory 4, the motion compensation unit 5 produces a compensation value corresponding to the presently coding image data.

The second source encoder 7 receives the quantized transformation coefficients from the first source encoder 2 and entropy-encodes the NxM data after scanning the NxM data with a scan pattern selected on the basis of the scan pattern selection information provided from the coding controller 1. The motion vector encoder 9 receives information on the motion vector from the motion prediction unit 6, and encodes and outputs such information. The coding information encoder 8 receives coding type information, quantization information, and other information required for decoding from the coding controller 1, and encodes and outputs such information. The multiplexer 10 multiplexes outputs of the second source encoder 7, the coding information encoder 8 and the motion vector encoder 9, and outputs an ultimate bit stream.

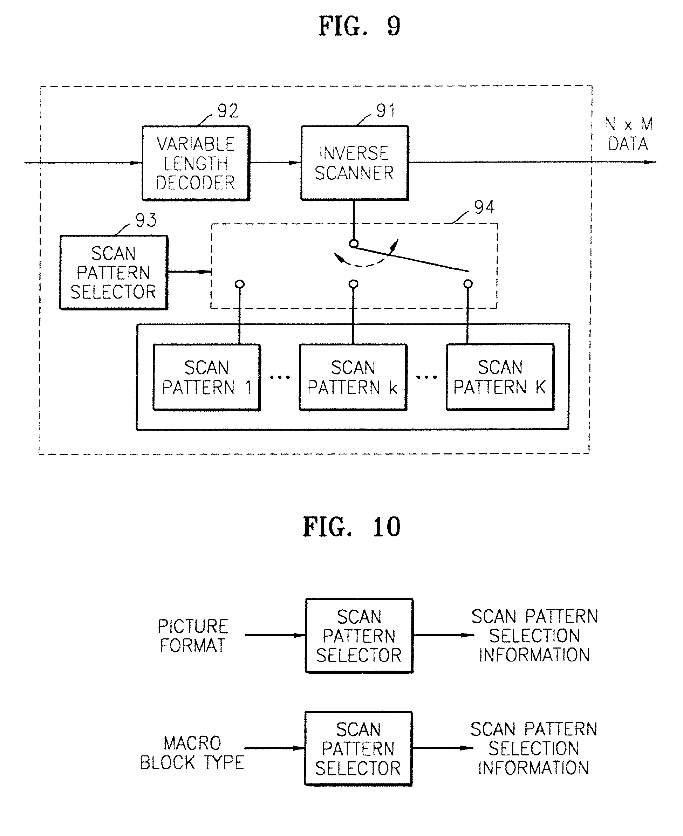

FIG. 9 is a block diagram of a decoding apparatus according to a preferred embodiment of the present invention. Referring to FIG. 9, the decoding apparatus comprises an inverse scanner 91, a variable length decoder 92, and a scan pattern selector 93. A switch 94 shown in FIG. 9 selects at least one scan pattern among a plurality of scan patterns NxM according to the scan pattern selection information provided from the scan pattern selector 93.

The variable length decoder 92 variable-length-decodes the input bit stream and transforms the input bit stream into symbol data. The inverse scanner 91 inversely scans the symbol data using at least one scan pattern selected by the switch 94 on the basis of the scan pattern selection information, and restructures the NxM data. Consequently, the NxM data is obtained as first source-coded block data. The symbol data in the present embodiment means run-level data. The variable length decoder 92 decodes predetermined code words included in the bit stream to obtain corresponding run-level data.

The scan pattern selector 93 operates on a predetermined scan pattern selection logic, and self-produces scan pattern selection information to be provided to the switch 94. It is noted that the characteristic of the scan pattern will be described on the basis of a coding process for convenience of the description. In accordance with the scan pattern selection logic, the scan pattern selector 93 may produce scan pattern selection information to select the scan pattern that reads an area having more substantially zero values later among the NxM data to be restructured. Particularly, in the event that the NxM data to be restructured is obtained from the image data having an interlaced scanned frame format, the scan pattern selector 93 produces such scan pattern selection information that selects the scan pattern to read horizontal high frequency component values relatively earlier than vertical high frequency component values in comparing with a zigzag pattern. In the event that the NxM data to be restructured is obtained from the image data having an interlaced scanning field format or progressive scanned frame format, the scan pattern selector 93 produces appropriate scan pattern selection information that selects the scan pattern to read the vertical and horizontal high frequency component values in a substantially equal order.

Alternatively, the scan pattern selector 93 may provide scan pattern selection information to select a scan pattern corresponding to a macro block type of the NxM data to be restructured, or provide scan pattern selection information to select a scan pattern corresponding to a picture format and a macro block type of the NxM data to be restructured. Further, the scan pattern selector 93 may produce scan pattern selection information to select different scan patterns for at least two sub-areas obtained by horizontally dividing the NxM data to be restructured or to select different scan patterns for at least two sub-areas obtained by vertically dividing the NxM data to be restructured, or may produce scan pattern selection information to select different scan patterns for at least four sub-areas obtained by vertically and horizontally dividing the NxM data to be restructured. Moreover, it is also possible to arbitrarily divide the area of the NxM data to be restructured into at least two sub-areas and to provide scan pattern selection information to select different scan patterns for each of such sub-areas.

The information representing whether a coding unit of the input image data during the coding process is a frame format or a field format, or whether the input image data is a progressive scanned image or an interlaced scanned image, i.e., picture format information representing the picture format of the input image data or macro block type information representing the macro block type should be necessarily transferred to the decoding apparatus. Therefore, if the scan pattern selection logic is predetermined to select a predetermined scan pattern on the basis of such information, it is advantageous to select a scan pattern without sending information to select the scan pattern from the coding apparatus to the decoding apparatus.

FIGS. 10 to 12 show embodiments of the scan pattern selector 93 shown in FIG. 9. Referring to FIG. 10, the scan pattern selector 93 receives picture format information and produces corresponding scan pattern selection information in accordance with the scan pattern selection logic, or receives macro block type information and produces corresponding scan pattern selection information.

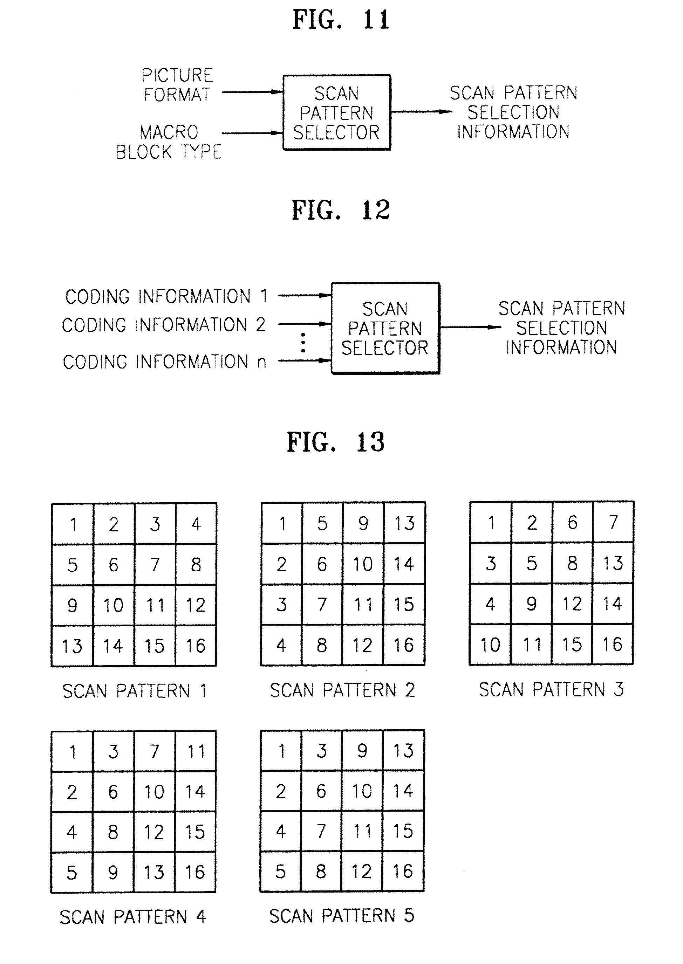

Referring to FIG. 11, the scan pattern selector 93 receives picture format information and macro block type information, and produces corresponding scan pattern selection information in accordance with the scan pattern selection logic.

Referring to FIG. 12, the scan pattern selector 93 receives a plurality of coding information NxM, and produces corresponding scan pattern selection information in accordance with the scan pattern selection logic. The coding information mentioned above is conditional information for coding, which is provided from a transmitter to the decoding apparatus for decoding.

In regard to FIGS. 10 to 12, the scan pattern selection logic may be implemented in a predetermined mapping table. The mapping table may include mapping information in which a predetermined scan pattern is mapped with respect to predetermined coding information. For example, a scan pattern corresponding to macro block type information, picture format information, or the like can be mapped.

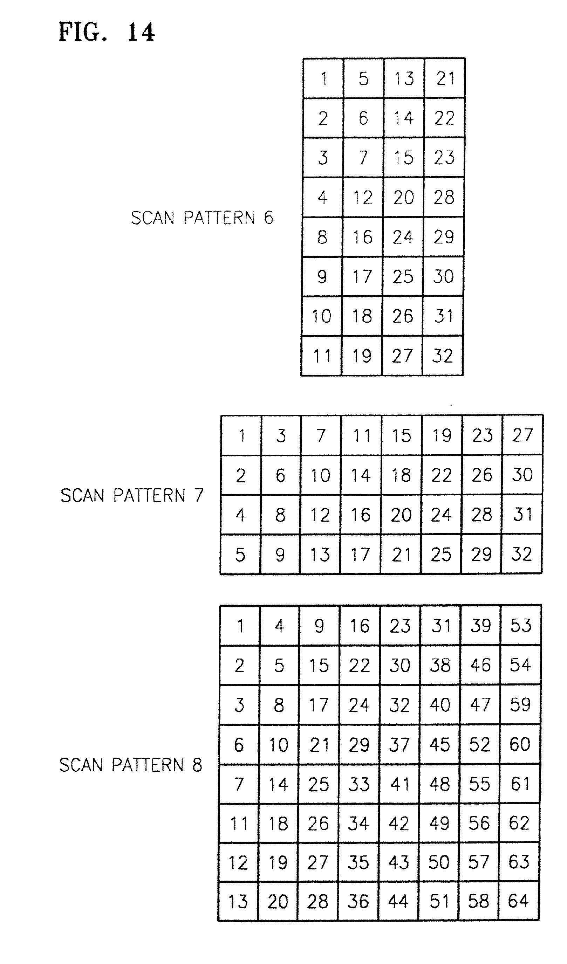

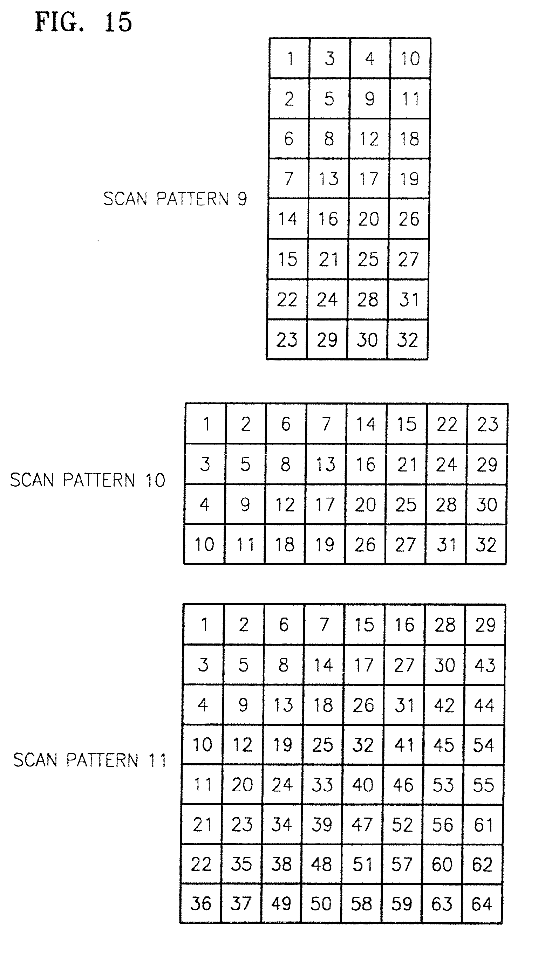

FIGS. 13 to 15 show scan patterns according to an embodiment of the present invention, which can be used by the coding apparatus or the decoding apparatus described above with reference to FIGS. 7 to 9. For example, the coding controller 1 of the coding apparatus or the scan pattern selector 93 of the decoding apparatus may select the scan pattern 4 representing a case where the probability of horizontal high frequency component values becoming zeroes is lower than the probability of vertical high frequency component values becoming zeroes in the event that the picture format is the interlaced scanned frame format. Otherwise, the scan pattern 3 may be selected.

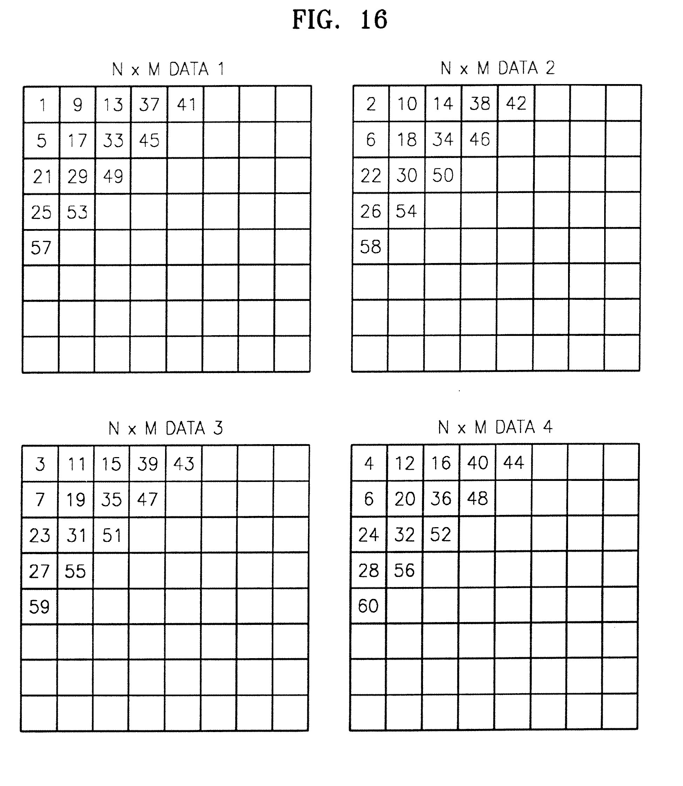

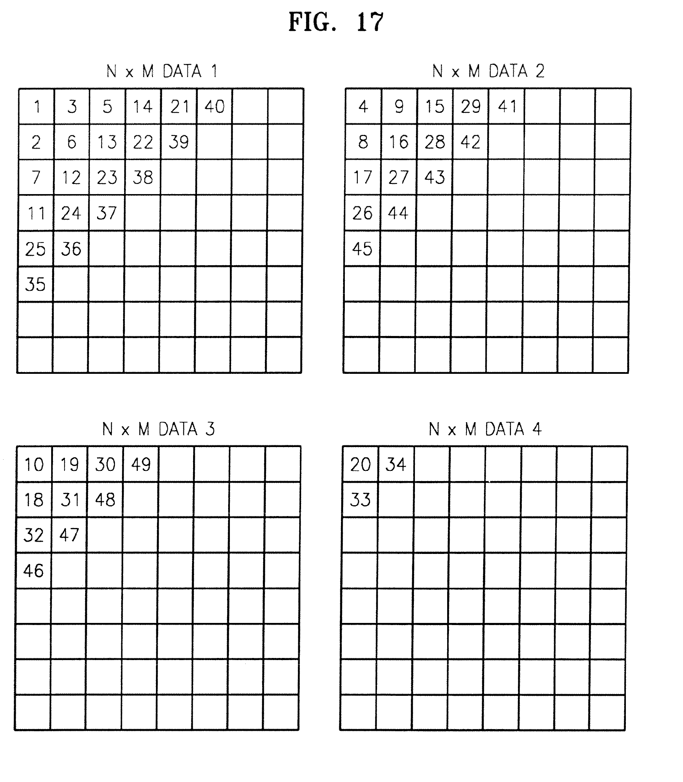

FIGS. 16 and 17 show scan patterns according to another embodiment of the present invention. Referring to FIGS. 16 and 17, there are shown scan patterns that scan a plurality of NxM blocks simultaneously by rendering a plurality of NxM data as a block. Specifically, component values of a plurality of NxM data 1, 2,3,4 are rendered as component values of the scanning NxM data. The number and size of the NxM data to be rendered as a block can be determined variously upon requirements, and the scanning order therefor can be correspondingly adjusted.

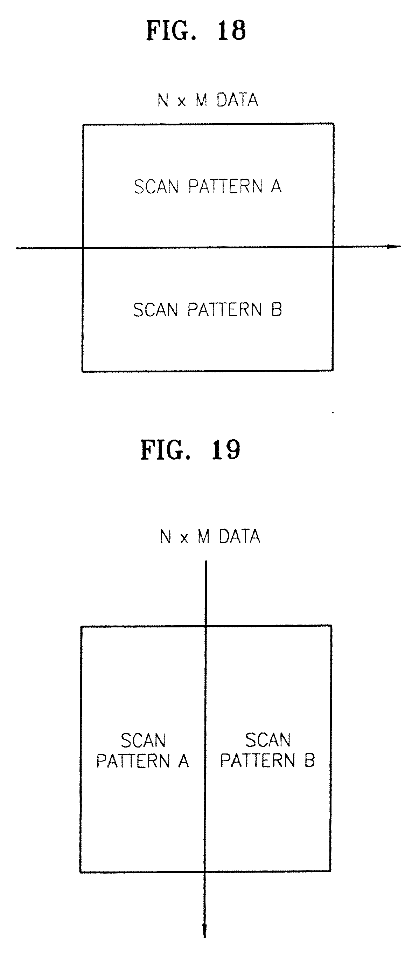

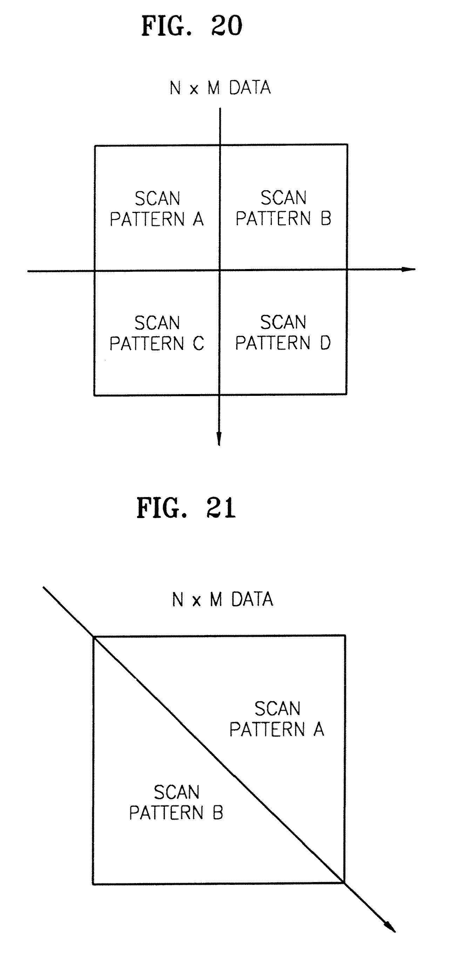

FIGS. 18 to 21 show dividing modes for using a plurality of scanning patterns according to preferred embodiments of the present invention. Referring to FIGS. 18 to 21, there are shown modes for dividing the NxM data so that the coding apparatus or the decoding apparatus described above with reference to FIGS. 7 to 9 can use a plurality of scan patterns. For example, the coding controller 1 of the coding apparatus or the scan pattern selector 93 of the decoding apparatus may produce scan pattern selection information to select different scan patterns for at least two sub-areas obtained by horizontally dividing the NxM data as shown in FIG. 16 or by vertically dividing the NxM data as shown in FIG. 17, or produce scan pattern selection information to select different scan patterns for at least four sub-areas obtained by vertically and horizontally dividing the NxM data as shown in FIG. 18. Furthermore, it is also possible to produce scan pattern selection information to select different scan patterns for at least two sub-areas obtained by diagonally dividing the NxM data as shown in FIG. 19. Moreover, it is possible to produce scan pattern selection information to select different scan patterns for at least two sub-areas obtained by arbitrarily dividing the NxM data, or produce scan pattern selection information to select different scan patterns for at least two sub-areas obtained by arbitrarily dividing the block rendering the NxM data as one block.

Meanwhile, on the contrary to the above described embodiments, the scan pattern selector 93 of the decoding apparatus may receive scan pattern selection information provided from the coding apparatus or read the scan pattern selection information stored in the coding apparatus, and produce scan pattern selection information on the basis of such received or read information.

The above-described coding method and decoding method can be applied to multidimensional data without substantial modifications or changes. Further, the above-described coding method and decoding method can be incorporated into a computer program. A computer programmer in the field of the present invention may easily write the codes or code segments to constitute the computer program. Further, the program can be stored in a computer readable information-recoding medium, and can be read and implemented to realize the coding method and decoding method. The computer readable information-recoding medium includes magnetic recording medium, optical recording medium, and carrier wave medium.

### Industrial Applicability

As described above, according to the present invention, coding and decoding image data having various characteristics can be implemented efficiently. Particularly, even for the image data having an interlaced scanning frame format, more efficient coding and decoding can be achieved. Moreover, coding efficiencies for the images having relatively much motion or relatively much variation in a vertical direction can be improved.

The present invention can be widely applied to a variety of fields including real time interactive applications such as videophones, audio/video communications through a mobile network, video application services through the Internet, video transmission for sign language or lip-reading communication, video storage and retrieval for video on demand services, video storage and transmission application for video mails, multi-location communication through heterogeneous network, digital broadcasting, etc.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A coding method of image data, comprising:
(a) obtaining NxM data by firstly source-coding the image data;
(b) scanning the obtained NxM data using a scan pattern selected from a plurality of scan patterns; and
(c) secondly source-coding the scanned data,
wherein the scan pattern is selected based on a macro block type of the obtained NxM data.

2. The coding method according to claim 1, wherein the macro block type is inter block type or intra block type.

3. The coding method according to claim 1, wherein step (a) comprises:
(a1) transforming the image data; and
(a2) quantizing the transformed image data to produce the NxM data.

4. A decoding method of image data, comprising:
(a) producing scan pattern selection information to select a scan pattern among a plurality of scan patterns;
(b) inversely scanning the image data that is variable-length-decoded to obtain NxM data using at least one scan pattern selected on the basis of the scan pattern selection information; and
(c) source-decoding the NxM data,
wherein the scan pattern selection information is produced on the basis of a macro block type of the NxM data.

5. The decoding method according to claim 4, wherein the macro block type is inter block type or intra block type.

6. The decoding method according to claim 4, wherein step (c) comprises:
(c1) inversely quantizing the NxM data; and
(c2) inversely transforming and decoding the inversely quantized NxM data.

7. A decoding method of image data, comprising:
(a) variable-length-decoding the image data;
(b) inversely scanning the image data variable-length-decoded to obtain NxM data using at least one scan pattern selected from a plurality of scan patterns; and
(c) source-decoding the NxM data,
wherein the at least one scan pattern is selected from a plurality of scan patterns based on a macro block type of the obtained NxM data.

8. The decoding method according to claim 7, wherein the macro block type is inter block type or intra block type.

9. The decoding method according to claim 7, wherein step (a) comprises:
(a1) transforming code words that constitute the image data into predetermined symbol data.

10. The decoding method according to claim 9, wherein the symbol data is run-level data.

11. A decoding method of image data, comprising:
(a) obtaining symbol data by variable-length-decoding the image data;
(b) obtaining transformation coefficients from the symbol data;
(c) producing scan pattern selection information to select a predetermined scan pattern among a plurality of scan patterns;
(d) inversely scanning the transformation coefficients to obtain NxN data using the scan pattern based on the scan pattern selection information; and
(e) source-decoding the inversely scanned data,
wherein the scan pattern selection information is produced on the basis of a macro block type of the obtained NxM data.

12. The decoding method according to claim 11, wherein the macro block type is inter block type or intra block type.

13. A coding apparatus of image data, comprising:
a first encoder that firstly encodes the image data to produce NxM data;
a coding controller that produces scan pattern selection information used to select a scan pattern in response to NxM data; and
a second encoder that scans the NxM data with the scan pattern based on the scan pattern selection information and secondly encoding the NxM data,
wherein the scan pattern selection information is produced on the basis of a macro block type of the NxM data.

14. The coding method according to claim 13, wherein the macro block type is inter block type or intra block type.

15. The coding apparatus according to claim 13, wherein the first encoder includes a transformer that transforms the image data; and a quantizer that quantizes the data transformed by the transformer and produces the NxM data.

16. A decoding apparatus of image data, including:
a second decoder that decodes the image data to produce transformation coefficients;
a scan pattern selector that produces a scan pattern selection information to select a predetermined scan pattern among a plurality of scan patterns; and
an inverse scanner that inversely scans the transformation coefficients to NxM data using the scan pattern based on the scan pattern selection information,
wherein the scan pattern selection information is produced on the basis of a macro block type of the NxM data.

17. The coding method according to claim 16, wherein the macro block type is inter block type or intra block type.

18. The decoding apparatus according to claim 16, further including a first decoder that source-decodes the data inversely scanned by the inverse scanner.
